# EUROPÄISCHE PATENTSCHRIFT

(11) **EP 2 108 222 B1**
(45) Veröffentlichungstag und Bekanntmachung des Hinweises auf die Patenterteilung: **26.04.2017**
(21) Anmeldenummer: 08701198.7
(22) Anmeldetag: 02.01.2008
(51) Int. Cl.: H04B 3/30

(54) **VORRICHTUNG**
APPARATUS
DISPOSITIF

(30) Priorität: 09.01.2007 DE 102007001413
(43) Veröffentlichungstag der Anmeldung: 14.10.2009
(73) Patentinhaber: Continental Automotive GmbH, 30165 Hannover (DE)
(72) Erfinder: BOLZ, Stephan, 93102 Pfatter (DE)
(86) Internationale Anmeldenummer: PCT/EP2008/050010
(87) Internationale Veröffentlichungsnummer: WO 2008/084002

(56) Entgegenhaltungen:
- WO-A-2005/008911
- WO-A-2005/101684

## Beschreibung

Die Erfindung betrifft eine Vorrichtung, die mit mindestens zwei Leitungen koppelbar ist zum Übertragen eines differenziellen Signals, das im Wesentlichen symmetrisch ist zu einem vorgegebenen Bezugspotential, und/oder zum Empfangen eines solchen differenziellen Signals und die eine Symmetriereinheit umfasst, die mit den mindestens zwei Leitungen koppelbar ist und die einen Mittelabgriff aufweist, und eine Überwachungseinheit, die eingangsseitig mit dem Mittelabgriff gekoppelt ist und die ausgebildet ist, eine Mittelabgriffsspannung zwischen dem Mittelabgriff und dem vorgegebenen Bezugspotential zu überwachen und einen Fehler zu erkennen, wenn die Mittelabgriffsspannung größer ist als ein vorgegebener Schwellenwert.

Eine solche Vorrichtung ist aus der WO2005/101684 A1 bekannt. Dort ist ein Ungleichgewichtsdetektor mit dem Mittelabgriff einer zwischen den zwei Leitungen verschalteten Spule verbunden und zeigt ein Ungleichgewicht zwischen den zwei Leitungen an.

Auch die WO 2005/008911 A1 offenbart eine ähnliche Vorrichtung, bei der allerdings ein Strommesssensor zwischen den zwei Leitungen angeordnet ist, der einen Differenzstrom ermittelt, welcher zur Ausbalancierung der Leitungen herangezogen wird.

Hochfrequente Signale mit großen Spannungsamplituden können in Bezug auf ihre elektromagnetische Verträglichkeit, kurz: EMV, Probleme bereiten. Dies gilt insbesondere in Kraftfahrzeugen. Beispielsweise unterliegt die elektromagnetische Abstrahlung in einem Frequenzbereich zwischen 150 kHz und 25 MHz, entsprechend dem AM-Band, mit den darin vorgesehenen Lang-, Mittel- und Kurzwellenbändern starken Beschränkungen. Beispielsweise ist ein Grenzwert von 30 dBµV/m in dem genannten Frequenzbereich vorgesehen für die elektromagnetische Abstrahlung in einem Kraftfahrzeug, in dem ein elektrischer Verbraucher über einen Kabelbaum elektrisch mit einem Steuergerät gekoppelt ist und durch dieses über den Kabelbaum mit elektrischer Energie in Form des hochfrequenten Signals versorgt wird. Die übertragene elektrische Leistung liegt beispielsweise in der Größenordung von etwa 200 Watt. Eine weitere Schwierigkeit besteht darin, dass Fehler, beispielsweise ein Kurzschluss in dem Kabelbaum und insbesondere ein Kurzschluss gegen ein Massepotential, erkannt werden müssen, um eine einfache, kostengünstige und schnelle Behebung des Fehlers zu ermöglichen, um die Sicherheit der Fahrzeuginsassen gewährleisten zu können und um einen zuverlässigen Betrieb des Kraftfahrzeugs gewährleisten zu können.

Die Aufgabe der Erfindung ist, eine Vorrichtung zu schaffen, die ein zuverlässiges Erkennen eines Fehlers an Leitungen für eine differenzielle Signalübertragung ermöglicht.

Die Aufgabe wird gelöst durch die Merkmale des unabhängigen Patentanspruchs.

Die Erfindung zeichnet sich aus durch eine Vorrichtung, die mit mindestens zwei Leitungen koppelbar ist zum Übertragen eines differenziellen Signals, das im Wesentlichen symmetrisch ist zu einem vorgegebenen Bezugspotential, und/oder zum Empfangen eines solchen differenziellen Signals. Die Vorrichtung umfasst eine Symmetriereinheit, die mit den mindestens zwei Leitungen koppelbar ist und die einen Mittelabgriff aufweist. Die Vorrichtung umfasst ferner eine Überwachungseinheit, die eingangsseitig mit dem Mittelabgriff gekoppelt ist und die ausgebildet ist, eine Mittelabgriffsspannung zwischen dem Mittelabgriff und dem vorgegebenen Bezugspotential zu überwachen und einen Fehler zu erkennen, wenn die Mittelabgriffsspannung größer ist als ein vorgegebener Schwellenwert. Dabei umfasst die Überwachungseinheit einen Spannungsteiler, einen Gleichrichter und einen Komparator. Der Spannungsteiler ist elektrisch zwischen dem Mittelabgriff und dem vorgegebenen Bezugspotential angeordnet. Der Gleichrichter ist mit dem Spannungsteiler gekoppelt. Der Komparator ist eingangsseitig mit dem Gleichrichter gekoppelt. Der Komparator ist ferner ausgebildet, die herunter geteilte und gleichgerichtete Mittelabgriffsspannung mit einer den vorgegebenen Schwellenwert repräsentierenden Referenzspannung zu vergleichen und ausgangsseitig ein Fehlersignal bereitzustellen, das den Fehler anzeigt. Der Spannungsteiler bildet insbesondere den mindestens einen Widerstand, der den Mittelabgriff elektrisch mit dem vorgegebenen Bezugspotential koppelt. Der Vorteil ist, dass die Überwachungseinheit sehr einfach ist und den Fehler zuverlässig erkennen kann.

Die Erfindung beruht auf der Erkenntnis, dass es vorteilhaft ist, ein Signal, insbesondere ein hochfrequentes Signal mit großer Spannungsamplitude, differenziell zu übertragen, so dass das Signals im Wesentlichen symmetrisch ist in Bezug auf das vorgegebene Bezugspotential, das insbesondere einem Massepotential entspricht. Dadurch ist eine elektromagnetische Abstrahlung gering und vorgegebene Grenzwerte bezüglich der elektromagnetischen Abstrahlung können zuverlässig eingehalten werden. Ferner ist das Signal auch bei einem Fehler, insbesondere bei einem Kurzschluss einer der mindestens zwei Leitungen auf das vorgegebene Bezugspotential, weiterhin zuverlässig übertragbar oder empfangbar. Durch die Überwachung der Mittelabgriffsspannung ist jedoch der Fehler, insbesondere der einseitige Kurzschluss auf das vorgegebene Bezugspotential, zuverlässig erkennbar. Im Allgemeinen sind Symmetriefehler des differenziell übertragenen oder empfangenen Signals in Bezug auf das vorgegebene Bezugspotential einfach und zuverlässig erkennbar, wenn der Symmetriefehler so groß ist, dass die Mittelabgriffsspannung größer ist als der vorgegebene Schwellenwert.

Die Erfindung ist besonders geeignet für ein Übertragen elektrischer Energie über die mindestens zwei Leitungen in Form des differenziellen Signals zum Betreiben eines elektrischen Verbrauchers, beispielsweise zum Betreiben einer Heizung, insbesondere einer induktiven Heizung eines Kraftstoffeinspritzventils in einem Kraftfahrzeug.

Ausführungsbeispiele der Erfindung sind im Folgenden anhand der schematischen Zeichnungen erläutert.

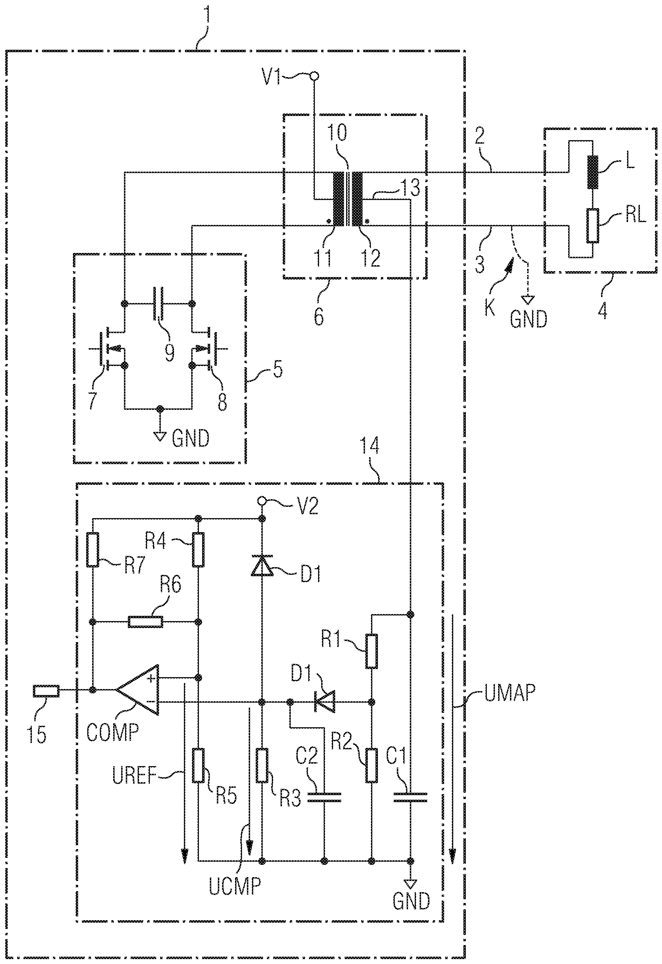

Die einzige Figur zeigt eine Vorrichtung 1, die über eine erste Leitung 2 und eine zweite Leitung 3 mit einer Last 4, das heißt mit einem elektrischen Verbraucher, gekoppelt ist. Die Vorrichtung 1 ist beispielsweise ein Steuergerät in einem Kraftfahrzeug und die erste und die zweite Leitung 2, 3 sind beispielsweise in einem Kabelbaum des Kraftfahrzeugs geführt. Die Vorrichtung 1 ist ausgebildet, eine hochfrequente, vorzugsweise sinusförmige Wechselspannung mit hoher Spannungsamplitude zu erzeugen und der Last 4 über die erste und die zweite Leitung 2, 3 zuzuführen. Beispielsweise beträgt eine Frequenz der Wechselspannung etwa 45 kHz und beträgt die Spannungsamplitude etwa 140 V zwischen Maximum und Minimum des Signalverlaufs innerhalb einer Schwingungsperiode. Beispielsweise wird auf diese Weise eine Leistung in einer Größenordnung von etwa 200 Watt von der Vorrichtung 1 zu der Last 4 übertragen.

Zwar liegt die Frequenz der Wechselspannung mit etwa 45 kHz unterhalb eines AM-Bandes, das sich von 150 kHz bis 25 MHz erstreckt. Jedoch können harmonische Oberwellen der Wechselspannung in diesem Frequenzbereich liegen. Kritisch kann in diesem Beispiel beispielsweise eine dritte harmonische Oberwelle mit einer Frequenz von etwa 135 kHz sein, die sehr dicht an dem AM-Band liegt und aufgrund von Toleranzen weiter in Richtung des AM-Bandes verschoben sein kann.

Beispielsweise ist die Last 4 ein induktiv beheizbares Kraftstoffeinspritzventil. Jedoch können die Frequenz der Wechselspannung, die Spannungsamplitude und/oder die übertragene Leistung auch größer oder kleiner sein. Ferner ist die Vorrichtung 1 auch mit einer anderen Last 4 betreibbar. Ferner kann die Vorrichtung 1 auch als elektrische Last ausgebildet sein, der über die erste und die zweite Leitung 2, 3 elektrische Energie in Form des Signals zuführbar ist. Die Vorrichtung 1 ist dann ausgebildet, das ihr zugeführte Signal zu empfangen.

Die Vorrichtung 1 umfasst eine Oszillatoreinheit 5 und eine Symmetriereinheit 6 zum Erzeugen des Signals. Die Symmetriereinheit 6 ist mit der ersten und der zweiten Leitung 2, 3 gekoppelt und ist ausgebildet, das Signal in Bezug auf ein vorgegebenes Bezugspotential GND zu symmetrieren. Das über die erste und die zweite Leitung 2, 3 übertragene Signal ist daher im Wesentlichen symmetrisch in Bezug auf das vorgegebene Bezugspotential GND. Das Signal wird somit differenziell übertragen. Dies ist besonders günstig in Bezug auf eine elektromagnetische Abstrahlung, die insbesondere bei hochfrequenten Signalen mit großer Spannungsamplitude in störendem Maße auftreten kann und gegebenenfalls andere elektrische Komponenten stören kann. Das vorgegebene Bezugspotential GND ist insbesondere ein Massepotential, zum Beispiel das Potential eines Chassis eines Kraftfahrzeugs.

Die Oszillatoreinheit 5 umfasst vorzugsweise einen Leistungsoszillator. Die Oszillatoreinheit 5 umfasst einen ersten Transistor 7 und einen zweiten Transistor 8, die vorzugsweise als Leistungstransistoren ausgebildet sind. Ein jeweiliger Source-Anschluss des ersten und des zweiten Transistors 7, 8 ist mit dem vorgegebenen Bezugspotential GND gekoppelt. Ein jeweiliger Drain-Anschluss des ersten und des zweiten Transistors 7, 8 ist mit jeweils einem Anschluss einer Oszillatorkapazität 9 gekoppelt. Die Oszillatoreinheit 5 ist ferner so ausgebildet, dass ein jeweiliger Gate-Anschluss des ersten und des zweiten Transistors 7, 8 wechselseitig angesteuert wird.

Die Symmetriereinheit umfasst einen Transformator 10 mit einer Primärwicklung 11 und einer Sekundärwicklung 12. Die Primärwicklung 11 ist elektrisch parallel zu der Oszillatorkapazität 9 angeordnet und ist ferner mit einem ersten vorgegebenen Versorgungspotential V1 gekoppelt. Eine Spannung zwischen dem ersten vorgegebenen Versorgungspotential V1 und dem vorgegebenen Bezugspotential GND beträgt beispielsweise etwa zwölf Volt. Diese Spannung kann jedoch auch größer oder kleiner als zwölf Volt sein.

Die Sekundärwicklung 12 ist mit der ersten und der zweiten Leitung 2, 3 gekoppelt. Die Last 4 umfasst beispielsweise eine Lastinduktivität L und einen Lastwiderstand RL, die elektrisch in Reihe angeordnet sind. Die Lastinduktivität L und der Lastwiderstand RL bilden mit der Sekundärwicklung 12 und der ersten und der zweiten Leitung 2, 3 einen Stromkreis.

Die Frequenz des über die erste und die zweite Leitung 2, 3 übertragbaren differenziellen Signals ist im Wesentlichen durch einen Kapazitätswert der Oszillatorkapazität 9 und durch einen Induktivitätswert der durch den Transformator 10 transformierten Lastinduktivität L vorgegeben.

Bei Auftreten eines Fehlers, insbesondere eines Kurzschlusses K entweder der ersten oder der zweiten Leitung 2, 3 auf das vorgegebene Bezugspotential GND, kann die Symmetrie des Signals in Bezug auf das vorgegebene Bezugspotential GND verloren gehen. Beispielsweise tritt der Kurzschluss K zwischen der zweiten Leitung 3 und dem vorgegebenen Bezugspotential GND auf, wie in der Figur dargestellt ist. Die Übertragung des Signals von der Vorrichtung 1 zu der Last 4 ist dadurch nicht beeinträchtig. Jedoch ist das übertragene Signal nicht mehr symmetrisch in Bezug auf das vorgegebene Bezugspotential GND. Dadurch kompensieren sich die positiven und die negativen Anteile des Signals nicht mehr, die auf der ersten und der zweiten Leitung in Bezug auf das vorgegebene Bezugspotential GND übertragen werden sollen. Dadurch kann die elektromagnetische Abstrahlung erheblich erhöht sein. Ferner können dadurch gegebenenfalls vorgegebene Grenzwerte bezüglich der elektromagnetischen Abstrahlung nicht mehr eingehalten werden. Daher muss dieser Fehler, das heißt der Kurzschluss K, erkannt werden, so dass dieser behoben werden kann.

Dazu umfasst die Sekundärwicklung 12 der Symmetriereinheit 6 einen Mittelabgriff 13 und umfasst die Vorrichtung 1 eine Überwachungseinheit 14, die eingangsseitig mit dem Mittelabgriff 13 gekoppelt ist. Die Überwachungseinheit 14 umfasst einen ersten Spannungsteilerwiderstand R1 und einen zweiten Spannungsteilerwiderstand R2, die elektrisch in Reihe angeordnet sind und die einen Spannungsteiler bilden. Elektrisch parallel zu dem Spannungsteiler ist ein Kondensator C1 angeordnet. Der Mittelabgriff 13 ist über den Spannungsteiler und den Kondensator C1 elektrisch mit dem vorgegebenen Bezugspotential GND gekoppelt. Zwischen dem Mittelabgriff 13 und dem vorgegebenen Bezugspotential GND, also über dem Spannungsteiler und dem Kondensator C1, fällt eine Mittelabgriffsspannung UMAP ab.

Die Überwachungseinheit 14 umfasst ferner einen Gleichrichter, der durch eine Gleichrichterdiode D1 gebildet ist. Der Gleichrichter ist eingangsseitig mit einem Abgriff des Spannungsteilers gekoppelt. Die Mittelabgriffsspannung UMAP wird durch den Spannungsteiler abhängig von einem Widerstandswert des ersten Spannungsteilerwiderstands R1 und einem Widerstandswert des zweiten Spannungsteilerwiderstands R2 herunter geteilt und der Gleichrichterdiode D1 an ihrem Anodenanschluss zugeführt. Ferner sind ein Siebkondensator C2 und ein Entladewiderstand R3 vorgesehen, die elektrisch parallel zueinander angeordnet sind und die ferner so angeordnet sind, dass diese einen Kathodenanschluss der Gleichrichterdiode D1 mit dem vorgegebenen Bezugspotential GND elektrisch koppeln. Ferner ist der Kathodenanschluss der Gleichrichterdiode D1 über eine Spannungsbegrenzungsdiode D2 mit einem zweiten vorgegebenen Versorgungspotential V2 gekoppelt. Eine Spannung des zweiten vorgegebenen Versorgungspotentials V2 in Bezug auf das vorgegebene Bezugspotential GND beträgt beispielsweise etwa fünf Volt. Diese Spannung kann jedoch ebenso größer oder kleiner als fünf Volt sein.

Über dem Entladewiderstand R3 und dem Siebkondensator C2 fällt eine Vergleichsspannung UCMP ab, die im Wesentlichen einer Spitzenspannung der herunter geteilten Mittelabgriffsspannung UMAP entspricht. Die Überwachungseinheit 14 umfasst einen Komparator COMP, dessen invertierender Eingang mit dem Kathodenanschluss der Gleichrichterdiode D1 gekoppelt ist. Dem Komparator COMP wird somit die Vergleichsspannung UCMP zugeführt. Ferner ist ein weiterer Spannungsteiler vorgesehen umfassend einen ersten Referenzspannungswiderstand R4 und einen zweiten Referenzspannungswiderstand R5, die elektrisch in Reihe und elektrisch zwischen dem zweiten vorgegebenen Versorgungspotential V2 und dem vorgegebenen Bezugspotential GND angeordnet sind. Ein Abgriff des weiteren Spannungsteilers ist mit einem nicht-invertierenden Eingang des Komparators COMP gekoppelt. Ein jeweiliger Widerstandswert des ersten und des zweiten Referenzspannungswiderstands R4, R5 ist so vorgegeben, dass an dem nicht-invertierenden Eingang des Komparators COMP eine vorgegebene Referenzspannung UREF in Bezug auf das vorgegebene Bezugspotential GND anliegt. Die vorgegebene Referenzspannung UREF repräsentiert unter Berücksichtigung eines Teilungsfaktors des Spannungsteilers mit dem ersten und dem zweiten Spannungsteilerwiderstand R1, R2 einen vorgegebenen Schwellenwert der Mittelabgriffsspannung UMAP.

Ferner ist ein Rückkopplungswiderstand R6 vorgesehen, der den nicht-invertierenden Eingang des Komparators COMP mit einem Ausgang des Komparators COMP elektrisch koppelt. Insbesondere wenn der Ausgang des Komparators COMP ein so genannter Open-Collector-Ausgang ist, kann zusätzlich ein Pullup-Widerstand R7 vorgesehen sein, der den Ausgang des Komparators COMP mit dem zweiten vorgegebenen Versorgungspotential V2 koppelt. Der Ausgang des Komparators COMP bildet einen Fehlerausgang 15 der Überwachungseinheit 14.

Der Komparator COMP ist ausgebildet, die Vergleichsspannung UCMP mit der vorgegebenen Referenzspannung UREF zu vergleichen und abhängig von der Vergleichsspannung UCMP und der vorgegebenen Referenzspannung UREF eine Ausgangsspannung des Fehlerausgangs 15 in Bezug auf das vorgegebene Bezugspotential GND zu erzeugen. Insbesondere entspricht die Ausgangsspannung einem digitalen High-Pegel, wenn die Vergleichsspannung UCMP kleiner ist als die vorgegebene Referenzspannung UREF, und entspricht einem digitalen Low-Pegel, wenn die Vergleichsspannung UCMP größer ist als die vorgegebene Referenzspannung UREF. Im letzteren Fall kann das Vorliegen des Low-Pegels an dem Fehlerausgang 15 auch als ein Fehlersignal bezeichnet werden. Die Ausgangsspannung, die Pegel und/oder das Fehlersignal können jedoch auch anders vorgegeben sein.

Beispielsweise liegt die Mittelabgriffsspannung UMAP während eines Betriebs der Vorrichtung 1 ohne den Kurzschluss K etwa in einer Größenordnung von zum Beispiel 700 mV in Bezug auf das Minimum und Maximum der Mittelabgriffsspannung UMAP innerhalb einer Schwingungsperiode, wenn der Symmetriefehler des zu übertragenen Signals lediglich etwa ein Prozent beträgt. Ein solcher Symmetriefehler ist im Allgemeinen tolerierbar und gegebenenfalls aufgrund von Toleranzen auch unvermeidbar. Liegt jedoch der Kurzschluss K vor, verschiebt sich das Potential an dem Mittelabgriff 13 in Bezug auf das vorgegebene Bezugspotential GND, so dass die Mittelabgriffsspannung UMAP beispielsweise etwa 70 V in Bezug auf das Minimum und Maximum der Mittelabgriffsspannung UMAP innerhalb einer Schwingungsperiode beträgt. Um einen entsprechenden Faktor größer ist dann auch die Vergleichsspannung UCMP, die dann bei geeigneter Dimensionierung des Spannungsteilers und des weiteren Spannungsteilers größer ist als die vorgegebene Referenzspannung UREF. Auf diese Weise ist der Verlust der Symmetrie des Signals in Bezug auf das vorgegebene Bezugspotential GND und entsprechend auch der Kurzschluss K einfach und zuverlässig erkennbar.

Vorteilhaft ist, dass der Mittelabgriff 13 über den ersten und den zweiten Spannungsteilerwiderstand R1, R2 mit dem vorgegebenen Bezugspotential GND gekoppelt ist. Eine Summe der Widerstandswerte des ersten und des zweiten Spannungsteilerwiderstands R1, R2 liegt beispielsweise in der Größenordnung von etwa 100 Kiloohm. Die Summe der Widerstandswerte kann jedoch auch kleiner oder größer als 100 Kiloohm sein. Auf diese Weise können einseitig wirkende parasitäre Kapazitäten, das heißt im Wesentlichen entweder an der ersten Leitung 2 oder an der zweiten Leitung 3 wirkende parasitäre Kapazitäten, über den ersten und den zweiten Spannungsteilerwiderstand R1, R2 zu dem vorgegebenen Bezugspotential GND entladen werden, so dass die Symmetrie des über die erste und die zweite Leitung 2, 3 übertragenen Signals dauerhaft erhalten bleibt, wenn kein Fehler vorliegt. Ferner wird bei Vorliegen des Kurzschlusses K die betroffene Hälfte der Sekundärwicklung 12 durch einen durch den ersten und den zweiten Spannungsteilerwiderstand R1, R2 fließenden Strom nur geringfügig zusätzlich belastet, so dass die Vorrichtung 1 und die Last 4 ohne Verlust ihrer Funktion zuverlässig weiter betreibbar sind.

Die Vorrichtung 1 kann auch anders ausgebildet sein. Insbesondere kann eine andere Oszillatoreinheit und/oder eine andere Symmetriereinheit vorgesehen sein. Anstatt das zu übertragene oder zu empfangene differenzielle Signal mittels des Transformators 10 zu symmetrieren, kann dieses beispielsweise auch mittels eines Symmetrierspannungsteilers symmetriert werden, der mindestens zwei Widerstände oder Halbleiterbauelemente umfasst, zwischen denen elektrisch der Mittelabgriff 13 angeordnet ist. Ferner kann auch die Überwachungseinheit 14 anders ausgebildet sein.

## Patentansprüche

1. Vorrichtung, die mit mindestens zwei Leitungen koppelbar ist zum Übertragen eines differenziellen Signals, das im Wesentlichen symmetrisch ist zu einem vorgegebenen Bezugspotential (GND), und/oder zum Empfangen eines solchen differenziellen Signals und die
- eine Symmetriereinheit (6) umfasst, die mit den mindestens zwei Leitungen koppelbar ist und die einen Mittelabgriff (13) aufweist, und
- eine Überwachungseinheit (14), die eingangsseitig mit dem Mittelabgriff (13) gekoppelt ist und die ausgebildet ist, eine Mittelabgriffsspannung (UMAP) zwischen dem Mittelabgriff (13) und dem vorgegebenen Bezugspotential (GND) zu überwachen und einen Fehler zu erkennen, wenn die Mittelabgriffsspannung (UMAP) größer ist als ein vorgegebener Schwellenwert, **dadurch gekennzeichnet,**
**dass** die Überwachungseinheit (14) umfasst
- einen Spannungsteiler, der elektrisch zwischen dem Mittelabgriff (13) und dem vorgegebenen Bezugspotential (GND) angeordnet ist,
- einen Gleichrichter, der mit dem Spannungsteiler gekoppelt ist,
- einen Komparator (COMP), der eingangsseitig mit dem Gleichrichter gekoppelt ist und der ausgebildet ist, die herunter geteilte und gleichgerichtete Mittelabgriffsspannung (UMAP) mit einer den vorgegebenen Schwellenwert repräsentierenden Referenzspannung (UREF) zu vergleichen und ausgangsseitig ein Fehlersignal bereitzustellen, das den Fehler anzeigt.

## Claims

1. Apparatus that is couplable to at least two lines for the purpose of transmitting a differential signal that is substantially symmetrical in relation to a prescribed reference-earth potential (GND), and/or for the purpose of receiving a differential signal of this kind, and that comprises
- a balancing unit (6) that is couplable to the at least two lines and that has a centre tap (13), and
- a monitoring unit (14), the input side of which is coupled to the centre tap (13) and which is designed to monitor a centre tap voltage (UMAP) between the centre tap (13) and the prescribed reference-earth potential (GND) and to identify a fault if the centre tap voltage (UMAP) is higher than a prescribed threshold value,
**characterized**
**in that** the monitoring unit (14) comprises
- a voltage divider that is electrically arranged between the centre tap (13) and the prescribed reference-earth potential (GND),
- a rectifier that is coupled to the voltage divider,
- a comparator (COMP), the input side of which is coupled to the rectifier and which is designed to compare the divided and rectified centre tap voltage (UMAP) with a reference voltage (UREF) representing the prescribed threshold value and to provide on the output side a fault signal that indicates the fault.

## Revendications

1. Dispositif pouvant être couplé à au moins deux lignes pour transmettre un signal différentiel qui est sensiblement symétrique par rapport à un potentiel de référence prédéterminé (GND) et/ou pour recevoir un tel signal différentiel, et comprenant
- une unité de symétrisation (6) qui peut être couplée auxdites au moins deux lignes et comportant un point milieu (13), et
- une unité de surveillance (14) qui est couplée du côté de l'entrée au point milieu (13) et est configurée pour surveiller une tension de point milieu (UMAP) entre le point milieu (13) et le potentiel de référence prédéterminé (GND) et pourà détecter une erreur lorsque la tension de point milieu (UMAP) est supérieure à une valeur de seuil prédéterminée, **caractérisé en ce que** l'unité de surveillance (14) comprend
- un diviseur de tension qui est disposé électriquement entre le point milieu (13) et le potentiel de référence prédéterminé (GND),
- un redresseur qui est couplé au diviseur de tension,
- un comparateur (COMP) qui est couplé du côté de l'entrée à l'onduleur et est configuré pour comparer la tension de point milieu (UMAP) subdivisée et redressée à une tension de référence (UREF) représentant la valeur de seuil prédéterminée et pour fournir du côté de la sorte un signal d'erreur qui indique l'erreur.
